# EUROPÄISCHE PATENTSCHRIFT

(11) **EP 4 019 327 B1**
(45) Veröffentlichungstag und Bekanntmachung des Hinweises auf die Patenterteilung: **02.09.2026**
(21) Anmeldenummer: 21214762.3
(22) Anmeldetag: 15.12.2021
(51) Int. Cl.: B60N 2/75

(54) **HÖHENVERSTELLBARER STEUERHEBELTRÄGER FÜR EINEN NUTZFAHRZEUGSITZ**
HEIGHT-ADJUSTABLE CONTROL LEVER HOLDER FOR A COMMERCIAL VEHICLE SEAT
SUPPORT DE LEVIER DE COMMANDE RÉGLABLE EN HAUTEUR POUR UN SIÈGE DE VÉHICULE UTILITAIRE

(30) Priorität: 23.12.2020 DE 102020134877
(43) Veröffentlichungstag der Anmeldung: 29.06.2022
(73) Patentinhaber: GRAMMER AG, 92289 Ursensollen (DE)
(72) Erfinder: Haller, Erwin, 92262 Birgland (DE); Krivenkov, Konstantin, 92224 Amberg (DE)
(74) Vertreter: Hannke Bittner & Partner mbB Regensburg

(56) Entgegenhaltungen:
- DE-A1- 19 701 388
- GB-A- 2 007 497
- KR-A- 20150 130 710

## Beschreibung

Die Erfindung betrifft einen höhenverstellbaren Steuerhebelträger für einen Nutzfahrzeugsitz, der zumindest teilweise seitlich von einem Sitzteil angeordnet ist, gemäß dem Oberbegriff des Patentanspruches 1. Die Offenbarung KR 2015 0130710 A zeigt zum Beispiel einen höhenverstellbaren Steuerhebelträger aus dem Stand der Technik.

In Baumaschinenfahrzeugen, Staplerfahrzeugen oder verschiedenen anderen landwirtschaftlichen Fahrzeugen, wie Traktoren, Mähdrescher etc., sind häufig die Nutzfahrzeugsitze mit Steuerhebeln ausgestattet, die dazu dienen verschiedene Fahrzeugeinrichtungen zu steuern. Derartige Steuerhebel können beispielsweise Joysticks, Fahrhebel oder andere Bedienelemente sein, die zumeist im vorderen Bereich einer Armlehne angeordnet sind.

Derartige Steuerhebel sind zusammen mit einer Armauflage und verschiedenen weiteren Einrichtungen in einem Steuerhebelkasten untergebracht, der mithilfe eines Steuerhebelträgers als Modul eines Fahrersitzes vorliegt. Ein derartiger Steuerhebelträger ist zumeist seitlich von dem Sitzteil etwas erhöht derart angebracht, dass der Fahrer seinen Arm auf dem darauf angeordneten Steuerhebelkasten ablegen kann.

Da die Benutzer von derartigen Nutzfahrzeugsitzen häufig unterschiedlich hoch sind, sind auch die Körpermaße von Fahrer zu Fahrer unterschiedlich. Dies erfordert, dass Steuerhebelträger höhenverstellbar sind. Hierfür gibt es inzwischen verschieden Lösungen, jedoch sind diese mit zusätzlichen Einrichtungen und Aufwand verbunden, wie nachfolgend beschrieben wird:
Bekannt sind Steuerhebelträger, die sich in Höhenrichtung verstellen lassen. Eine Längsverstellung, die ebenso zwingend notwendig ist, da unterschiedlich große Personen auch unterschiedlich lange Unterarme haben und somit der Abstand zwischen einem im vorderen Bereich einer Armlehne angeordneten Steuerhebel und der Rückenlehne gegebenenfalls verändert werden muss, wird andersartig verändert. Beispielsweise wird die Längsverstellung bei Baggersitzen mit einem Steuerhebelträger mittels insgesamt zwei Längsverstelleinrichtungen in Form von Schienenpaaren durchgeführt. Das erste Schienenpaar befindet sich zwischen einer unterseitig angeordneten Sitzfederung und einer Grundkonstruktion, die sich unterhalb des Sitzes erstreckt und zu dem Steuerhebelträger gehört. Ein zweites Schienenpaar befindet sich zwischen dieser Grundkonstruktion und dem darüberliegenden Sitzteil.

Das untere Schienenpaar dient dazu, den gesamten Sitz inklusive des Steuerhebelträgers in Sitzlängsrichtung gegenüber einer Karosserie zu verschieben. Somit ist der Abstand der Person zu dem Lenkrad oder den Fußpedalen einstellbar.

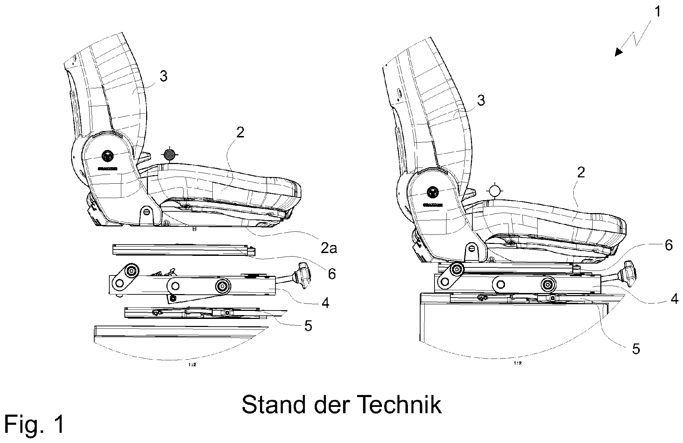

Das weitere Schienenpaar, nämlich das obere Schienenpaar dient dazu, bei einem höhenverstellten Steuerhebelträger die Längsverstellung derart vorzunehmen, dass der Fahrer einen optimalen Abstand von seinem SIP (Sitzindexpunkt) und dem Steuerhebel vorliegen hat. Somit müssen mehrere Verstelleinrichtungen bedient werden, sofern ein Fahrer aufgrund seiner Körpergröße eine Veränderung der Steuerhebelträgerabmessungen für eine optimale Bedienung des Steuerhebels wünscht. In Fig. 1 ist ein Fahrzeugsitz 1 gemäß dem Stand der Technik beschrieben. In dieser Darstellung ist zu sehen, dass der Fahrzeugsitz mit einem Sitzteil 2 und einer Rücklehne 3 an der Unterseite 2a des Sitzteiles ein weiteres Schienenpaar 6 neben dem bereits vorhandenen Schienenpaar 5 aufweist, wobei zwischen beiden Schienenpaaren eine Steuerhebelträgervorrichtung 4 angeordnet ist. Dieses weitere Schienenpaar 6 dient nur dazu den Fahrzeugsitz gegenüber dem Steuerhebelträger 4 optimal auszurichten, um dem Fahrer, der beispielsweise einen wesentlich kürzeren oder längeren Unterarm als der vorherige Fahrer aufweist, ebenso eine bedienungsfreundliche Position des Unterarms auf eine hier nicht näher dargestellten Armablage, die mit dem Steuerhebelträger 4 verbunden ist, zu ermöglichen.

Demzufolge ist es Aufgabe der Erfindung, einen höhenverstellbaren Steuerhebelträger für einen Nutzfahrzeugsitz zur Verfügung zu stellen, der keine weiteren Verstelleinrichtungen, wie beispielsweise ein zweites Schienenpaar benötigt und dennoch eine optimale Höhen- und Abstandseinstellung dem Fahrer bei Bedienen des Steuerhebels ermöglicht.

Diese Aufgabe wird gemäß den Merkmalen des Patentanspruches 1 gelöst.

Kerngedanke der Erfindung ist es, dass bei einem höhenverstellbaren Steuerhebelträger für ein Nutzfahrzeugsitz, der zumindest teilweise seitlich von einem Sitzteil angeordnet ist, wobei der Steuerhebelträger zur Aufnahme mindestens eines Steuerhebels zum Steuern von Fahrzeugeinrichtungen und mindestens einer Armauflage vorgesehen ist, der Steuerhebelträger eine Vielgelenkmechanikkonstruktion aufweist, mit der er sowohl in Sitzhöhenrichtung als auch in Sitzlängsrichtung gegenüber dem Sitzteil verstellbar ist. Sofern eine derartige Vielgelenkmechanikkonstruktion, die als Viergelenkmechanikkonstruktion ausgebildet sein kann, derart ausgerichtet ist, dass sie eine Höhenverstellung in Sitzhöhenrichtung durch Verschwenken einzelner Streben, die über diese Vielgelenkmechanik miteinander verbunden sind, ermöglicht, kann bei einer optimalen Ausbildung dieser Vielgelenkmechanikkonstruktion nicht nur eine Höhenverstellung sondern auch eine Längsverstellung und sogar eine Neigungsverstellung des Steuerhebelträgers und damit einer Armauflage, die auf diesen Träger angeordnet ist, sowie einem Steuerhebel erreicht werden. Hierbei beschreibt der Steuerhebelträger eine Art Kurvenbahn während einer Verstellung und nicht ausschließlich eine Verstellung in Höhenrichtung oder ausschließlich in Längsrichtung. Dies wird dadurch erreicht, dass bei einer Viergelenkmechanikkonstruktion aus zu einem Viereck gelenkig miteinander verbundene vier Streben, die Streben eben derart verbunden sind, gegebenenfalls unterschiedlich lang sind, in ihrer Schwenkachsenposition gegebenenfalls verschiebbar sind, und der Abstand zwischen den Streben auch unterschiedlich und/oder einstellbar ist. Bei den vier Streben handelt es sich bezüglich der Sitzlängsrichtung um eine vordere und eine hintere Strebe sowie bezüglich der Sitzhöhenrichtung um eine obere und untere Strebe.

Die vordere Strebe kann aus einer vertikalen Ausrichtung um eine erste Schwenkachse an ihrem unteren ersten Ende um einen ersten Winkel nach hinten und die hintere Strebe aus einer Vertikalausrichtung um eine zweite Schwenkachse an ihrem unteren zweiten Ende um einen zweiten Winkel nach hinten schwenkbar sein. Dies ermöglicht, dass der Steuerhebelträger zusammen mit dem Steuerkasten und somit zusammen mit mindestens einem Steuerhebel und einer Armauflage nach hinten und abwärts geschwenkt werden kann, wobei hierdurch der Steuerhebelträger auf einer Art Kurvenbahn verläuft. Dies ermöglicht, dass ein kleinerer Fahrer, der den Steuerhebelträger zusammen mit der Armlehne nach unten fahren möchte, zugleich ein Nach-Hinten-Verfahren des Steuerhebelträgers erfährt und somit eine verkürzte Strecke von dem SIP beziehungsweise auch der Rückenlehne zu dem vorne liegenden Steuerhebel zur Verfügung gestellt bekommt. Da kleinere Personen auch einen kürzeren Unterarm aufweisen, ist diese gleichzeitige Einstellung in Längs- und Höhenrichtung durch ein Verändern der Stellung dieser Viergelenkmechanikkonstruktion äußerst vorteilhaft. Andersherum würden größere Personen ein Nach-Oben-Fahren des Steuerhebelträgers und ein gleichzeitiges Nach-Vorne_Verfahren der Armlehne aufgrund der oben beschriebenen Kippbewegung beziehungsweise Schwenkbewegung erfahren.

Die vordere Strebe ist vorteilhaft aus einer Vertikalausrichtung um eine erste Schwenkachse an ihrem unteren ersten Ende um einen ersten Winkel nach hinten schwenkbar. Die hintere Strebe ist ebenso aus einer Vertikalausrichtung um eine zweite Schwenkachse an ihrem unteren zweiten Ende um einen zweiten Winkel nach hinten schwenkbar. Dies ermöglicht bei derartigen angeordneten zwei Streben ein schnelles Nach-Hinten- und somit Nach-Unten-Verfahren einer oberen Strebe der Viergelenkmechanikkonstruktion, wobei an dieser oberen Strebe die Armauflage beziehungsweise ein Steuerkasten und der Steuerhebel angebracht sind.

Vorteilhaft weisen die vordere und hintere Strebe unterschiedliche Längen auf. Hierdurch kann erreicht werden, dass zugleich mit dem Nach-Unten-Verschwenken beziehungsweise Nach-Unten-Verfahren des Steuerhebelträgers eine Neigung im oberen Bereich des Steuerhebelträgers, also im Bereich der oberen Strebe, stattfindet, wodurch sich die Armauflage nach hinten oder nach vorne neigt. Dies ist durchaus erwünscht, da bei einem Nach-Unten- und -Hinten-Verfahren des Steuerhebelträgers eine kleinere Person ihren Ellenbogen wunschgemäß immer noch auf der Armauflage ablegen möchte, um den notwendigen Komfort zu erhalten.

Vorteilhafter ist die erste Schwenkachse der vorderen Strebe in ihrer Positionierung veränderbar, um hierdurch eine Veränderung der Neigung des Steuerhebelträgers zu erreichen. Hierbei ist die erste Schwenkachse mit einem Pleuelbauteil verbunden, welches mit einem Steuerelement um eine erste Querachse geschwenkt und damit verändert ausgerichtet werden kann. Dies ermöglicht, dass zusätzlich zu einer ohnehin stattfindenden Neigungsverstellung während eines Auf- und Abwärtsbewegens des Steuerhebelträgers die Neigung im oberen Bereich des Steuerhebelträgers, also im Bereich der oberen Strebe, verstärkt verändert werden kann, um hierdurch beispielsweise einen gewünschten Neigungsausgleich im vorderen Bereich des Steuerhebels oder eine Verstärkung einer Neigungsverstellung mit der Auf- und Abwärtsbewegung des Steuerhebelträgers zu erreichen. Hierdurch kann auch bewirkt werden, dass bei einer Höhenverstellung des Steuerhebelträgers eine unterschiedlich starke Veränderung der Neigungsverstellung durch ein Voreinstellen der Neigung mit einem derartigen Pleuelbauteil erhalten wird.

Gemäß einer bevorzugten Ausführungsform gibt es ein in seiner Länge veränderbares Stellglied, wie eine Gasdruckfeder oder eine Gewindespindel, mit einem ersten Ende an einem Grundrahmen des Steuerhebelträgers und mit einem zweiten Ende an einer der Streben zum Verändern von dem ersten und zweiten Winkel, um hierdurch eine Veränderung der Position des Steuerhebelträgers in Sitzhöhenrichtung und Sitzlängsrichtung zu erreichen. Somit ist eine derartige Gasdruckfeder durch ein Ein- und Ausfahren des Kolbens dazu in der Lage, dass die Viergelenkmechanikkonstruktion insgesamt in ihrer Position zu verändern, und somit die gewünschte Position des Steuerhebelträgers sowohl in der Höhen- als auch in der Längsrichtung einzustellen.

Die vordere und/oder die hintere Strebe ist in Schwenkrichtung ihrer Schwenkbewegung mittels eines Federelements federbeaufschlagt, um entgegen einer Gasdruckfeder eine Federkraft wirken zu lassen und somit ein selbständiges Aufstellen der Viergelenkmechanikkonstruktion, also ein selbständiges NachOben-Stellen der Armlehne und somit des Steuerhebelträgers zu bewirken oder zumindest zu unterstützen.

Die Viergelenkmechanikkonstruktion ist jeweils links und rechts an der Seite eines Sitzteils angeordnet, sofern eine synchronisierte beidseitige Steuerhebelträgerkonstruktion erwünscht ist. Hierbei sind beide Viergelenkmechanikkonstruktionen mittels Querachsen zur synchronen Schwenkbewegung miteinander verbunden, wobei diese Querachsen und weitere Grundrahmenelemente unterhalb des Sitzteiles verlaufen. Ein Betätigungselement sowohl auf der linken als auch auf der rechten Seite kann ein gleichzeitiges ein Verstellen des Steuerhebelträgers an beiden Seiten bewirken.

Auf dem Steuerhebelträger ist mindestens ein Steuerhebelkasten angeordnet, der sowohl die Armauflage als auch verschiedene Steuerelemente enthält. Dies kann einseitig oder beidseitig, also auf der linken und rechten Seite vorhanden sein.

Weitere vorteilhafte Ausführungsformen ergeben sich auf der nachfolgenden Beschreibung in Verbindung mit der Zeichnung. Hierbei zeigen
- Fig. 1: ein Fahrzeugsitz gemäß dem Stand der Technik.
- Fig. 2a - c: in einer seitlichen Darstellung einen Fahrzeugsitz mit unterschiedlichen Höheneinstellungen eines Steuerhebelträgers, der nach hinten geneigten Steuerhebelträger ist;
- Fig. 3a - c: in einer seitlichen Darstellung den Fahrzeugsitz mit unterschiedlichen Höheneinstellungen eines nach vorne geneigten Steuerhebelträgers;
- Fig. 4: in einer seitlichen Ausschnittsdarstellung Ausschnitte des Steuerhebelträgers in seitlicher Darstellung und in verschiedenen Höhenpositionen.
- Fig. 5: in einer perspektivischen Darstellung die gesamte Steuerhebelträgervorrichtung mit zwei höhenverstellbaren Steuerhebelträgern links- und rechtsseitig eines hier nicht dargestellten Sitzteils;
- Fig. 6a - c: in einer seitlichen Darstellung den Fahrzeugsitz mit einer Höhenverstellung im unteren Bereich und verschiedenen Neigungsverstellungen des Steuerhebelträgers;
- Fig. 7a -: c den Fahrzeugsitz in seitlicher Darstellung mit einer mittig angeordneten Höhenverstellung des Steuerhebelträgers und unterschiedlich geneigtem Steuerhebelträger.
- Fig. 8a - c: in einer seitlichen Darstellung den erfindungsgemäßen Fahrzeugsitz mit einer oberen Höheneinstellung des Steuerhebelträgers und unterschiedlich geneigten Steuerhebelträger.
- Fig. 9: in einer seitlichen Darstellung Ausschnitte des Steuerhebelträgers in verschiedenen Neigungspositionen und
- Fig. 10: in einer perspektivischen Explosionsdarstellung ein Ausschnitt eines Pleuelbauteils zur Verstellung der Neigungsverstellung des erfindungsgemäßen Steuerhebelträgers.

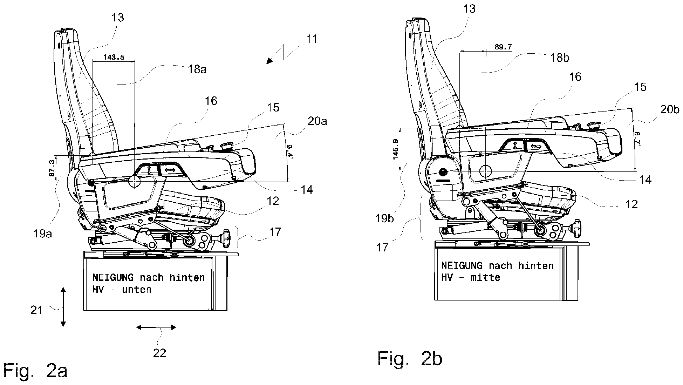

In den Figuren 2a - 2c zeigen verschiedene Darstellungen den erfindungsgemäßen Fahrzeugsitz mit dem erfindungsgemäßen Steuerhebelträger bei unterschiedlichen Höheneinstellungen. In Figur 2a ist der Fahrzeugsitz 11 mit einem Sitzteil 12 und einer Rücklehne 13 sowie einem Steuerkasten 14 und einem Steuerhebel 15 sowie der Armauflage 16 in einem Zustand, in dem sich der im Abschnitt 17 befindende Steuerhebelträger in einem unteren Bereich befindet. Das heißt der Steuerhebelträger hat eine geringe Höheneinstellung. Dies geht auch aus der Abstandsdarstellung 19a zwischen einem Schwenkpunkt der Rückenlehne 13 und der Armauflage 16 hervor.

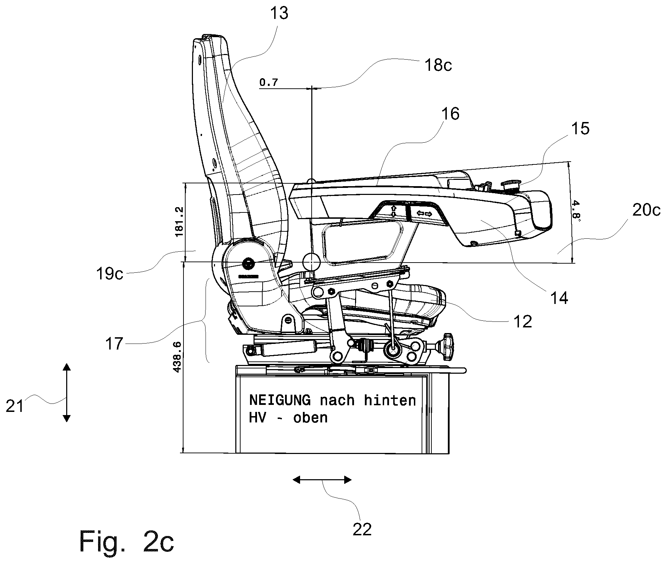

Durch einen Vergleich der Figuren 2a, 2b und 2c kann gesehen werden, dass der Höhenabstand 19a, 19b und 19c zunimmt. Dies bedeutet, dass der Steuerhebelträger im Bereich 17 nach oben gefahren wird. Somit weist der Steuerhebelträger in der Figur 2b eine mittlere Höhe und in Figur 2c eine obere Höhe auf.

Diesen Darstellungen ist ebenso zu entnehmen, dass die Neigung der Armauflage und damit des Steuerhebelträgers nach hinten gewandt ist. Dies ist deutlich durch einen Vergleich des Winkels gemäß den Bezugszeichen 20a, 20b und 20c zu erkennen.

Zugleich ist bei einem Vergleich dieser Figuren zu sehen, dass ein Abstand 18a, 18b und 18c zwischen dem SIP und einem auf der Armauflage 16 hinteren Bereich, an dem beispielsweise der Ellenbogen eines Fahrers abgesetzt werden kann, abnimmt. Dies bedeutet, dass der Steuerhebelträger samt der Steuerkonsole beziehungsweise dem Steuerkasten 14 mit zunehmender Höhe auch eine Längsverschiebung nach vorne erfährt. Demzufolge wird der Steuerhebelträger bei einem NachOben_Verfahren des Steuerhebelträgers zusammen mit dem Steuerkasten 14 in Längsrichtung 22 nach vorne verfahren. Das Bezugszeichen 21 gibt die Höhenrichtung der Bewegung des Steuerhebelträgers an.

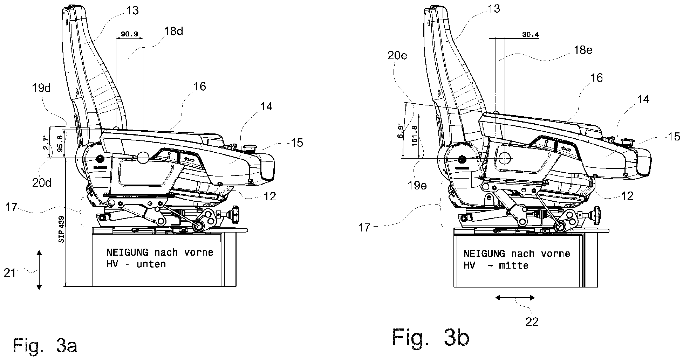

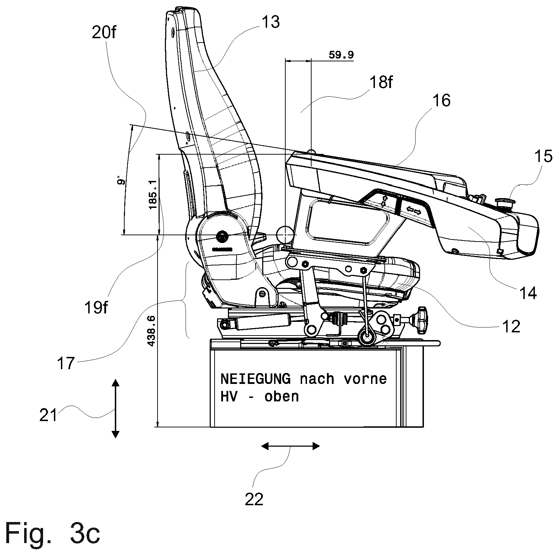

In Fig. 3a, 3b, 3c ist der Fahrzeugsitz nochmal in einer seitlichen Darstellung wiedergegeben, wobei der Steuerhebelträger im Bereich 17 wiederum in einer unteren Höhenposition (Fig. 3a), in einer mittleren Höhenposition (Fig. 3b) und in einer oberen Höhenposition (Fig. 3c) wiedergegeben ist. In diesem Fall ist jedoch die Neigungseinstellung des Steuerhebelträgers und damit des Steuerkastens 14 und der Armauflage 16 derart eingestellt, dass der Neigungswinkel sich nach vorne neigt. Dies ist durch die Bezugszeichen 20d, 20e und 20f verdeutlicht.

Wiederum ist deutlich eine Veränderung des Abstands zwischen der Ablage des Ellenbogens auf der Armauflage 16 und dem SIP zu erkennen. Dies wird durch die Bezugszeichen 18d, 18e und 18f verdeutlicht. Deutlich ist zu sehen, dass gemäß dem Bezugszeigen 18f die links- und rechtsseitigen Positionen von Ellenbogenablage und SIP sogar in ihrer Position sich vertauschen.

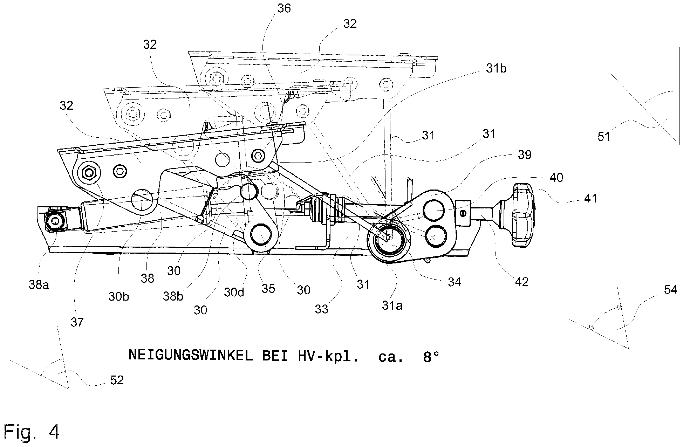

Gemäß dem Bezugszeichen 19d, 19e und 19f ist der Höhenunterschied mit zunehmender Höhenverstellung des Steuerhebelträgers wiederzuerkennen. In Fig.4 wird nun in einer Ausschnittsdarstellung der erfindungsgemäße Steuerhebelträger in einer seitlichen Darstellung in verschiedenen Positionen im Detail gezeigt. Dieser Darstellung ist zu entnehmen, dass eine erste vordere Strebe 31 und eine hintere Strebe 30 jeweils um einen Schwenkpunkt 34 und 35 schwenkbar angeordnet sind. Dies erfolgt derart, dass beide Streben 31, 30 nach oben in eine nahezu vertikale Ausrichtung geschwenkt werden können und andersherum nach hinten verschwenkt werden können, um den Steuerhebelträger in eine niedrigere Position zu versetzen.

Zugleich ist ein obere Strebe 32 vorhanden, die als Aufnahmevorrichtung für den Steuerkasten ausgebildet ist. Man kann bei dem Verlauf der oberen Strebe 32 in diesen drei verschiedenen Positionen deutlich erkennen, dass diese nicht nur in eine Positionsveränderung in Höhenrichtung 21, sondern auch eine Veränderung in Längsrichtung 22 erfährt. Zugleich wird die Neigung der oberen Seite der oberen Strebe 32 verändert. Dies kann jedoch noch zusätzlich durch ein später noch näher zu beschreibendes Pleuelbauteil 39 mit dazugehörigen Achsen 40, einer Gewindespindel 42 und einer Rändelschraube 41 beeinflusst werden.

Eine untere Strebe 33 bildet zusammen mit der oberen Strebe und der vorderen und hinteren Strebe eine Art Viereck, welches jedoch nicht gleichseitige _Ränder aufweist. Die untere Strebe 33 kann hierbei zugleich Teil eines Grundrahmens sein, beziehungsweise einer Grundkonstruktion sein, die später noch etwas näher dargestellt wird.

Ein unteres Ende 30a der hinteren Strebe 30 ist an der Schwenkachse 35 befestigt und wird um diese Schwenkachse herumgeschwenkt. Dies wird aus der Winkeldarstellung 52 nochmals deutlich. Ein oberes Ende 30b ist mit einer weiteren Schwenkachse 37 verbunden, welche wiederum mit der oberen Strebe verbunden ist.

Ein unteres Ende 31a ist mit der Schwenkachse 34 und damit mit dem Pleuelbauteil 39 und indirekt mit der unteren Strebe 33 verbunden. Die Bewegung der vorderen Strebe 31 wird durch den Winkelbereich 51 verdeutlicht. Eine Schwenkbewegung soll mit dem Bezugszeichen 54 wiedergegeben werden.

Ein oberes Ende 31b der vorderen Strebe ist mit einer Schwenkachse 36 verbunden und zugleich damit mit der oberen Strebe 32 in gelenkigen Kontakt.

Eine Gasdruckfeder 38 ist derart angeordnet, dass sie mit ihrem ersten Ende 38a an einem Grundrahmen beziehungsweise in diesem Fall an der unteren Strebe 33 gelenkig beziehungsweise schwenkbar befestigt ist. Mit ihrem zweiten Ende 38b ist sie mit der hinteren Strebe 30 verbunden, um diese nach vorne und nach hinten verschwenken zu lassen gemäß dem Bezugszeichen 54. Hierdurch wird die Viergelenkmechanikkonstruktion auf- und abgestellt und somit eine Höhen- und Längsverstellung des Steuerhebelträgers bewirkt.

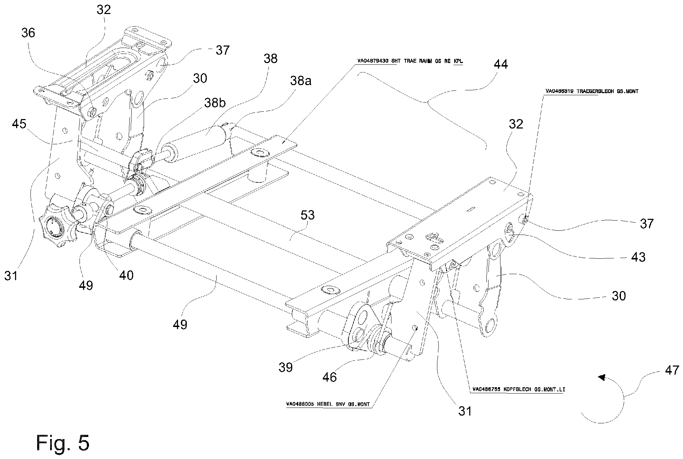

In Fig. 5 ist einer perspektivischen Darstellung die Steuerhebelträgervorrichtung wiedergegeben. Sitzteil und Rückenlehne sind nicht dargestellt auch weitere Elemente des Fahrzeugsitzes sind hier nicht wiedergegeben. Dieser Darstellung kann deutlich entnommen werden, dass bei Vorhandensein von zwei Steuerhebelträgern, also links- und rechtsseitig eines Fahrzeugsitzes eine Querverbindung über Querachsen 49, 53 und weitere Bauteilelemente geschaffen ist. Die weiteren Bauteile gemäß einem Grundrahmen 44 dienen dazu, beide Steuerhebelträger nicht nur synchron sich bewegen zu lassen, sondern auch eine Befestigung derselbigen in dem beziehungsweise an dem Fahrzeugsitz zu ermöglichen.

Gleiche und gleichbedeutende Bauteile sind nochmals mit gleichen Bezugszeichen versehen.

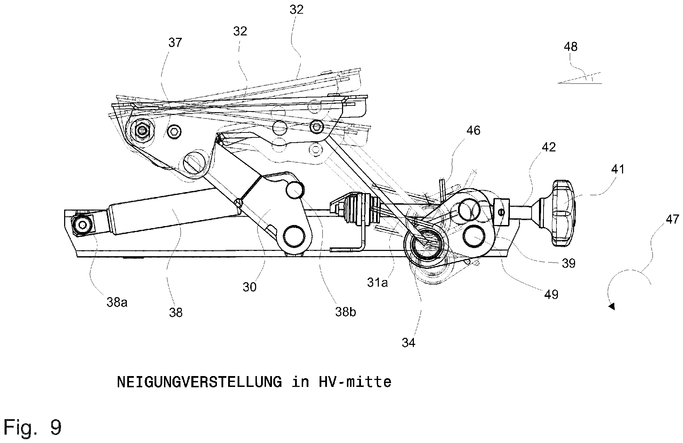

Eine Querachse 49 dient dazu, die Funktion des Pleuelbauteiles 39, auch in synchroner Weise, sicherzustellen. Hierfür findet eine Schwenkbewegung 47 des Pleuelbauteiles statt, um beispielsweise entgegen der Federkraft einer Federeinrichtung 46 den unteren Schwenkpunkt der vorderen Strebe 31 in seiner Position zu verändern. In Fig. 9 wird dies deutlicher dargestellt. Hier ist in einer seitlichen Darstellung zu sehen, dass drei verschiedenen Positionen hinsichtlich der Neigungseinstellung mittels des Pleuelbauteiles 39 möglich sind. Die Strebe 31 ist mit ihrem unteren Ende 31a an der Schwenkachse 34 angeordnet. Diese Schwenkachse ist wiederum mit dem Pleuelbauteil 39 verbunden, welches um eine Schwenkachse beziehungsweise Querachse 49 gedreht werden kann. Dies erfolgt dadurch, dass man beispielsweise mit einer Rändelschraube 41 die Gewindespindel 42 dreht. Dadurch wird ein Verschwenken des Pleuelbauteiles 39 in Schwenkrichtung 47 oder entgegen der Schwenkrichtung 47 erreicht. Dies hat zur Wirkung, dass die Positionierung der Schwenkachse 34 sich verändert und somit eine Neigung der oberen Strebe 32 in Längsrichtung stattfinden. Dies soll durch das Bezugszeichen 48 wiedergegeben werden.

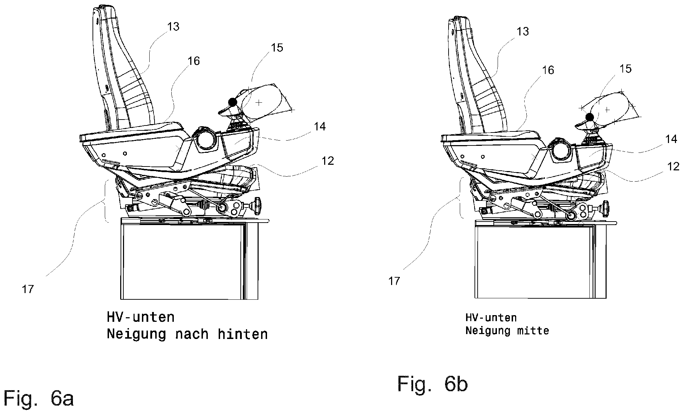

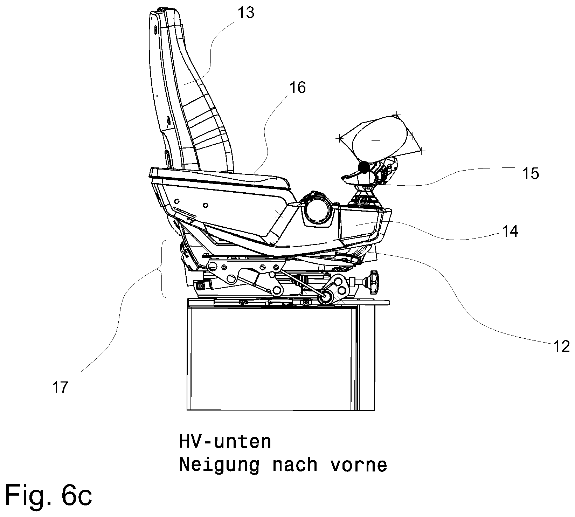

In Fig. 6a, 6b und 6c ist einer seitlichen Darstellung ein Fahrzeugsitz mit dem erfindungsgemäßen Steuerhebelträger wiedergegeben, wobei der Steuerhebelträger sich in einer unteren Höheneinstellung befindet und die Neigung des Steuerhebelträgers in seinem oberen Bereich der Armauflage 16 unterschiedlich dargestellt ist. In Fig. 6a ist die Neigung nach hinten gezeigt, in Fig. 6b ist die Neigung mittig und in Fig. 6c ist die Neigung nach vorne gezeigt.

Die Neigungseinstellung findet mit einem Pleuelbauteil, wie es in Verbindung mit Fig. 9 näher beschrieben wurde, statt.

Dieser Darstellung ist zu entnehmen, dass ein vorteilhafter Arbeitsbereich für eine Person im Bereich des Steuerhebels 15 durch eine Verstellung der Neigung sich einstellen lassen kann.

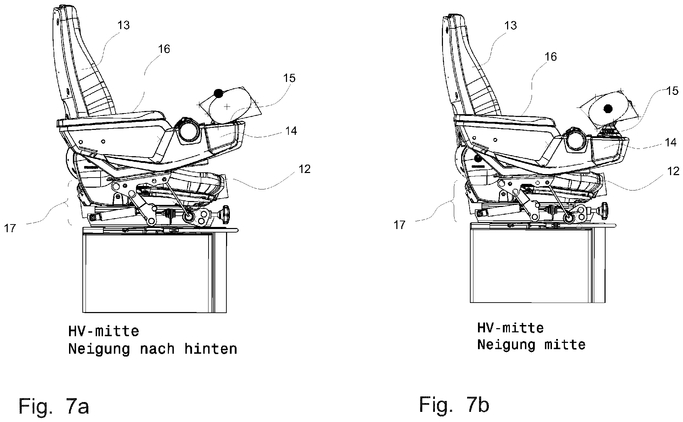

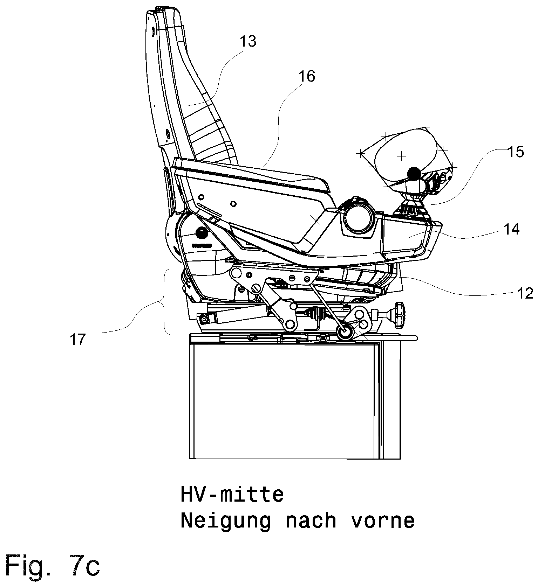

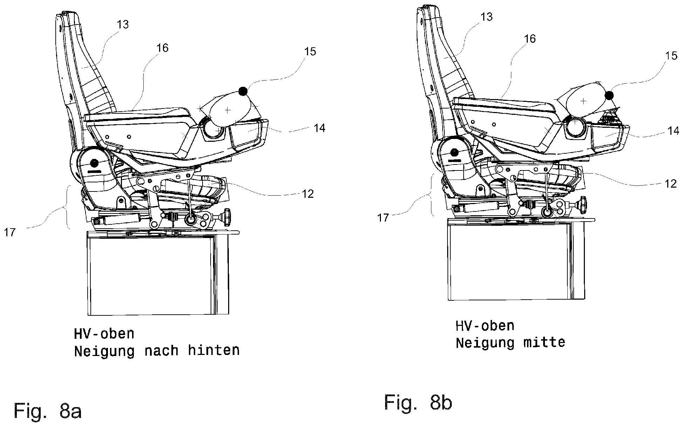

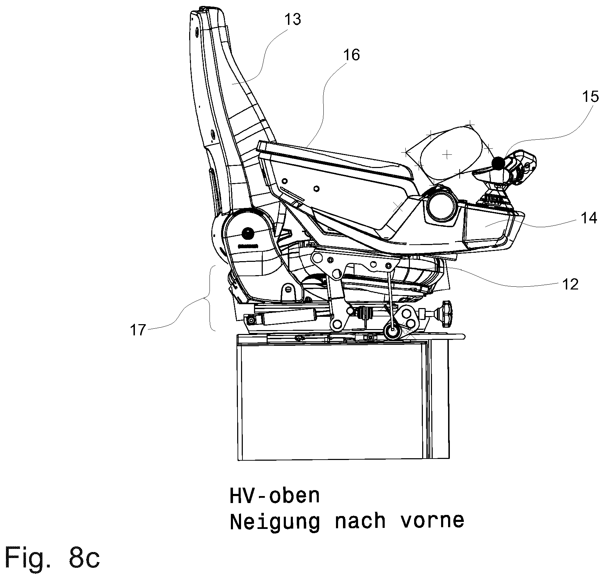

Dies wird auch nochmals deutlich, wenn man die Figuren 7a, 7b und 7c sowie 8a, 8b und 8c damit vergleicht. Diesen Darstellungen sind ebenso Fahrzeugsitze in seitlicher Ansicht zu entnehmen, wobei in den Figuren 7a, 7b und 7c sich der Steuerhebelträger in einer mittleren Höhenstellung befindet und in den Figuren 8a, 8b und 8c in einer oberen Höheneinstellung. Die Neigungen sind wiederum unterschiedlich wiedergegeben, sodass deutlich wird, dass ein erhöhter Sitzkomfort durch Ablegen des Unterarmes auf der Armauflage und einer nachträglichen Einstellung der Neigung erreicht wird.

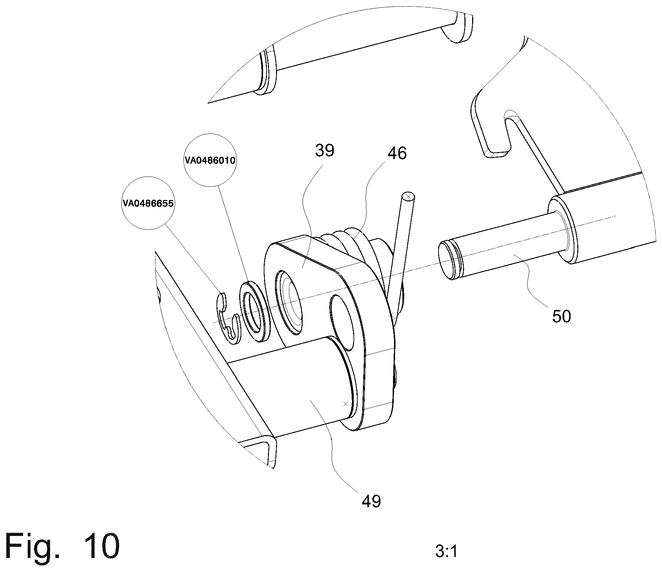

In Fig. 10 ist in einer Explosionsausschnittsdarstellung nochmals das Pleuelbauteil 39 mit der dazugehörigen Federeinrichtung 46 in Form einer Drehfeder und der Querachse 49 wiedergegeben. Diesbezügliche Funktionsbeschreibungen sind bereits in Verbindung mit Fig. 9 gemacht worden.

### Bezugszeichenliste

- 1: Fahrzeugsitz
- 2: Sitzteil
- 2a: Unterseite
- 3: Rückenlehne
- 4: Steuerhebelträger
- 5: Schienenpaar
- 6: Schienenpaar
- 11: Fahrzeugsitz
- 12: Sitzteil
- 13: Rückenlehne
- 14: Steuerkasten
- 15: Steuerhebel
- 16: Armauflage
- 17: Steuerhebelträger
- 19a - c: Höhenabstand
- 19d -f: Höhenverstellung
- 20a - c: Winkel
- 20 d- f: Neigungswinkel
- 21: Sitzhöhenrichtung
- 22: Sitzlängsrichtung
- 30: hintere Strebe
- 31: vordere Strebe
- 32: obere Strebe
- 34: Schwenkachse
- 35: Schwenkachse
- 39: Pleuelbauteil
- 41: Rändelschraube
- 42: Gewindespindel
- 44: Grundrahmen
- 49: Querachse
- 51: Winkel
- 52: Winkel
- 53: Querachse

## Patentansprüche

1. Höhenverstellbarer Steuerhebelträger (17) für einen Nutzfahrzeugsitz, der zumindest teilweise seitlich von einem Sitzteil (12) anordenbar ist, wobei der Steuerhebelträger (17) zur Aufnahme mindestens eines Steuerhebels (15) zum Steuern von Fahrzeugeinrichtungen und mindestens einer Armauflage (16) vorgesehen ist,
wobei der Steuerhebelträger (17) eine Vielgelenkmechanikkonstruktion aufweist, mit der er sowohl in Sitzhöhenrichtung (21) als auch in Sitzlängsrichtung (22) gegenüber dem Sitzteil (12) verstellbar ist, wobei die Vielgelenkmechanikkonstruktion eine Viergelenkmechanikkonstruktion aus zu einem Viereck gelenkig miteinander verbundene vier Streben, nämlich bezüglich der Sitzlängsrichtung (22) einer vorderen und einer hinteren Strebe (31, 30) sowie bezüglich der Sitzhöhenrichtung (21) einer oberen und einer unteren Strebe (32, 33), umfasst, wobei
die vordere Strebe (31) aus einer Vertikalausrichtung um eine erste Schwenkachse (34) an ihrem unteren ersten Ende (31a) um einen ersten Winkel (51) nach hinten und die hintere Strebe (30) aus einer Vertikalausrichtung um eine zweite Schwenkachse (35) an ihrem unteren zweiten Ende (30a) um einen zweiten Winkel (52) nach hinten schwenkbar sind, wobei
die erste Schwenkachse (34) der vorderen Strebe (31) in Ihrer Positionierung veränderbar ist, um hierdurch eine Veränderung der Neigung (48) des Steuerhebelträgers (17) zu erreichen
**dadurch gekennzeichnet, dass**
die erste Schwenkachse (34) mit einem Pleuelbauteil (39) verbunden ist, welches mit einem Steuerelement (41, 42) um eine erste Querachse (49) geschwenkt und damit verändert ausgerichtet werden kann.

2. Höhenverstellbarer Steuerhebelträger (17) nach Anspruch 1,
**dadurch gekennzeichnet, dass**
die vordere und die hintere Strebe (31, 30) unterschiedliche Längen aufweisen.

3. Höhenverstellbarer Steuerhebelträger (17) nach einem der vorangegangenen Ansprüche,
**dadurch gekennzeichnet, dass**
ein in seiner Länge veränderbares Stellglied, wie eine Gasdruckfeder (38) oder eine Gewindespindel, mit einem ersten Ende (38a) an einem Grundrahmen (44) des Steuerhebelträgers (17) und mit einem zweiten Ende (38b) an einer der Streben (30) zum Verändern von dem ersten und zweiten Winkel (51,52) verbunden ist, um hierdurch eine Veränderung der Position des Steuerhebelträgers (17) in Sitzhöhenrichtung (21) und in Sitzlängsrichtung (22) zu erreichen.

4. Höhenverstellbarer Steuerhebelträger (17) nach einem der vorangegangenen Ansprüche,
**dadurch gekennzeichnet, dass**
die vordere und/oder die hintere Strebe (31, 30) in Schwenkrichtung ihrer Schwenkbewegung (54) mittels eines Federelements (46) federbeaufschlagt ist/sind.

5. Höhenverstellbarer Steuerhebelträger (17) nach einem der vorangegangenen Ansprüche,
**dadurch gekennzeichnet, dass**
die Viergelenkmechanikkonstruktion jeweils links und rechts an den Seiten des Sitzteils (12) angeordnet ist und beide Viergelenkmechanikkonstruktionen mittels Querachsen (49, 53) zur synchronen Schwenkbewegung miteinander verbunden sind.

6. Höhenverstellbarer Steuerhebelträger (17) nach einem der vorangegangenen Ansprüche,
**dadurch gekennzeichnet, dass**
auf dem Steuerhebelträger (17) mindestens ein Steuerhebelkasten angeordnet ist.

## Claims

1. A height-adjustable control lever holder (17) for a commercial vehicle seat, arrangea-ble at least partially laterally of a seat part (12), wherein the control lever holder (17) is configured to receive at least one control lever (15) for controlling vehicle devices and at least one armrest (16),
wherein the control lever holder (17) comprises a multi-linkage mechanism whereby it is adjustable relative to the seat part (12) both in a seat height direction (21) and in a seat longitudinal direction (22),
wherein the multi-linkage mechanism comprises a four-bar linkage mechanism having four links pivotably connected to one another so as to form a quadrilateral, namely, with respect to the seat longitudinal direction (22), a front link and a rear link (31, 30), and, with respect to the seat height direction (21), an upper link and a lower link (32, 33),
wherein the front link (31) is pivotable rearwardly from a vertical orientation about a first pivot axis (34) at its lower first end (31a) through a first angle (51), and the rear link (30) is pivotable rearwardly from a vertical orientation about a second pivot axis (35) at its lower second end (30a) through a second angle (52),
wherein the position of the first pivot axis (34) of the front link (31) is variable so as to effect a change in the inclination (48) of the control lever holder (17),
**characterized in that**
the first pivot axis (34) is connected to a connecting rod component (39), which can be pivoted about a first transverse axis (49) by means of a control element (41, 42) and can thereby be adjusted to a different orientation.

2. The height-adjustable control lever holder (17) according to claim 1,
**characterized in that**
the front link and the rear link (31, 30) have different lengths.

3. The height-adjustable control lever holder (17) according to any one of the preceding claims,
**characterized in that**
a length-adjustable actuating element, such as a gas spring (38) or a threaded spindle, is connected with a first end (38a) to a base frame (44) of the control lever holder (17) and with a second end (38b) to one of the links (30) for varying the first and second angles (51, 52), thereby effecting a change in the position of the control lever holder (17) in the seat height direction (21) and in the seat longitudinal direction (22).

4. The height-adjustable control lever holder (17) according to any one of the preceding claims,
**characterized in that**
the front link and/or the rear link (31, 30) is/are spring loaded by a spring element (46) in the pivoting direction of its/their pivoting movement (54).

5. The height-adjustable control lever holder (17) according to any one of the preceding claims,
**characterized in that**
the four-bar linkage mechanism is arranged on each of the left-hand and right-hand sides of the seat part (12), and both four-bar linkage mechanisms are connected to one another by means of transverse axes (49, 53) for synchronous pivoting movement.

6. The height-adjustable control lever holder (17) according to any one of the preceding claims,
**characterized in that**
at least one control lever case is arranged on the control lever holder (17).

## Revendications

1. Support de levier de commande réglable en hauteur (17) pour un siège de véhicule utilitaire, lequel support est apte à être disposé au moins partiellement sur le côté d'une partie assise (12), le support de levier de commande (17) étant prévu pour recevoir au moins un levier de commande (15) destiné à commander des équipements de véhicule et au moins un accoudoir (16),
le support de levier de commande (17) présentant une structure mécanique à articulations multiples avec laquelle il est réglable non seulement dans la direction de la hauteur de siège (21) mais encore dans la direction longitudinale de siège (22) par rapport à partie assise (12), la structure mécanique à articulations multiples comportant une structure mécanique à quatre articulations constituée de quatre montants reliés entre eux de manière articulée pour former un quadrilatère, à savoir, par rapport à la direction longitudinale de siège (22), un montant avant et un montant arrière (31, 30), ainsi que, par rapport à la direction de hauteur de siège (21), un montant supérieur et un montant inférieur (32, 33),
le montant avant (31) étant apte à pivoter à partir d'une orientation verticale vers l'arrière autour d'un premier axe de pivotement (34) à sa première extrémité inférieure (31a) d'un premier angle (51) et le montant arrière (30) étant apte à pivoter à partir d'une orientation verticale vers l'arrière autour d'un second axe de pivotement (35) à sa seconde extrémité inférieure (30a) d'un second angle (52),
le positionnement du premier axe de pivotement (34) du montant avant (31) étant apte à être changé afin d'obtenir par là une modification de l'inclinaison (48) du support de levier de commande (17),
**caractérisé par le fait que**
le premier axe de pivotement (34) est relié à un élément bielle (39), lequel peut pivoter autour d'un premier axe transversal (49) à l'aide d'un élément de commande (41, 42) et peut donc être réorienté.

2. Support de levier de commande réglable en hauteur (17) selon la revendication 1,
**caractérisé par le fait que**
le montant avant et le montant arrière (31, 30) présentent des longueurs différentes.

3. Support de levier de commande réglable en hauteur (17) selon l'une des revendications précédentes, **caractérisé par le fait qu'**
un actionneur à longueur variable, tel qu'un ressort à gaz (38) ou une broche filetée, est relié par une première extrémité (38a) à un cadre de base (44) du support de levier de commande (17) et par une seconde extrémité (38b) à l'un des montants (30) pour modifier les premier et second angles (51, 52), afin d'obtenir par là une modification de la position du support de levier de commande (17) dans la direction de la hauteur de siège (21) et dans la direction longitudinale de siège (22).

4. Support de levier de commande réglable en hauteur (17) selon l'une des revendications précédentes, **caractérisé par le fait que**
le montant avant et/ou le montant arrière (31, 30) est/sont sollicité(s) élastiquement dans la direction de pivotement de leur mouvement de pivotement (54) au moyen d'un élément ressort (46).

5. Support de levier de commande réglable en hauteur (17) selon l'une des revendications précédentes, **caractérisé par le fait que**
la structure mécanique à quatre articulations est disposée respectivement à gauche et à droite sur les côtés de la partie assise (12) et que les deux structures mécaniques à quatre articulations sont reliées entre elles au moyen d'axes transversaux (49, 53) pour le mouvement de pivotement synchrone.

6. Support de levier de commande réglable en hauteur (17) selon l'une des revendications précédentes,
**caractérisé par le fait qu'**
au moins un boîtier de levier de commande est disposé sur le support de levier de commande (17).
